# EUROPÄISCHE PATENTSCHRIFT

(11) **EP 0 917 266 B1**
(45) Veröffentlichungstag und Bekanntmachung des Hinweises auf die Patenterteilung: **02.10.2002**
(21) Anmeldenummer: 98120767.3
(22) Anmeldetag: 02.11.1998
(51) Int. Cl.: H02B 1/01, H02B 1/32

(54) **Befestigungsvorrichtung**
Mounting device
Dispositif de montage

(30) Priorität: 14.11.1997 DE 19750427
(43) Veröffentlichungstag der Anmeldung: 19.05.1999
(73) Patentinhaber: Rittal-Werk Rudolf Loh GmbH & Co. KG, 35745 Herborn (DE)
(72) Erfinder: Besserer, Horst, 35745 Herbron (DE); Hartel, Marc, 35447 Reiskirchen (DE); Nicolai, Walter, 35418 Busek (DE)
(74) Vertreter: Fleck, Hermann-Josef, Dr.-Ing.

(56) Entgegenhaltungen:
- DE-C- 19 544 834

## Beschreibung

Die Erfindung betrifft eine Befestigungsvorrichtung zur Anbringung von Anbauelementen, wie Montageschienen, Ablageplatten oder dergleichen an vertikalen Rahmenprofilen eines Schaltschrankes, welche mit Reihen von in gleicher Teilung zueinander beabstandeten Befestigungsaufnahmen versehen sind, wobei an dem Rahmenprofil ein Befestigungsblock anbaubar ist, der mit Befestigungsaufnahmen zur Ankopplung des Anbauelementes versehen ist, wobei der Befestigungsblock als Stanz-Biegeteil aus einem Blechzuschnitt oder als Spritzteil gefertigt ist, wobei von dem Befestigungsblock wenigstens ein Hakenelement freigestellt ist, welches in eine zugeordnete Befestigungsaufnahme des Rahmenprofils einhängbar ist, wobei der Befestigungsblock zwei rechtwinklig zueinander stehende Seitenwände aufweist, die eine gemeinsame, dem Innenraum des Schaltschrankes zugewandte vertikale Innenkante bilden, und wobei die Seitenwände mit den Befestigungsaufnahmen zur Anbindung der Anbauelemente ausgestattet sind.

Eine derartige Befestigungsvorrichtung ist aus der DE 195 44 834 C1 bekannt.

In diesem Dokument ist ein Befestigungsblock gezeigt, der als Stanz-Biegeteil ausgebildet ist. Der Befestigungsblock weist zwei rechtwinklig zueinander stehende Seitenwände auf, die eine gemeinsame, dem Innenraum des Schaltschrankes zugewandte vertikale Innenkante bilden. Die beiden Seitenwände sind dabei jeweils mit einer Befestigungsaufnahme ausgestattet. Zur Befestigung des Befestigungsblockes an dem vertikalen Rahmenprofil ist ein Hakenelement verwendet. Dieses ist in eine zugeordnete Befestigungsaufnahme des vertikalen Rahmenprofiles einhängbar.

Eine solche Befestigungsvorrichtung ist aus der DE 195 37 016 C1 bekannt. In dieser Druckschrift ist ein Rahmengestell für einen Schaltschrank beschrieben, bei dem die Rahmenprofile spiegelbildlich zu ihrer Querschnittsdiagonalen ausgebildet sind und im Bereich der Innenseite des Rahmengestelles zwei mit Befestigungsaufnahmen versehene Aufnahmeabschnitte aufweisen. Diese Aufnahmeabschnitten sind parallel zu den zugeordnetnen Außenseiten des Rahmengestelles ausgerichtet und bilden eine Innenaufnahme. An diese Innenaufnahme schließt sich eine zur Querschnittsdiagonalen offene Schwalbenschwanznut an. In diese kann ein mit Schwalbenschwanzsteg versehener Befestigungsblock eingeführt und durch Drehung um 90° darin festgelegt werden. Dabei stützt sich der Befestigungsblock mit seinem Schwalbenschwanzsteg in der Schwalbenschwanznut ab. Die freien Flächen des Befestigungsblockes sind mit Gewindebohrungen versehen. An diesen können Montageschienen festgelegt werden.

Es ist Aufgabe der Erfindung, eine Befestigungsvorrichtung der eingangs erwähnten Art zu schaffen, mittels der die Anbauten auf einfache Weise im Schaltschrank-Innenraum festgelegt werden können.

Diese Aufgabe wird dadurch gelöst, dass der Befestigungsblock als Stanz-Biegeteil aus einem Blechzuschnitt oder als Spritzteil gefertigt ist, wobei von dem Befestigungsblock wenigstens ein Hakenelement freigestellt ist, welches in eine zugeordnete Befestigungsaufnahme des Rahmenprofils einhängbar ist, wobei der Befestigungsblock zwei rechtwinklig zueinander stehende Seitenwände aufweist, die eine gemeinsame, dem Innenraum des Schaltschrankes zugewandte vertikale Innenkante bilden, und wobei die Seitenwände mit den Befestigungsaufnahmen zur Anbindung der Anbauelemente ausgestattet sind, dass die Seitenwände in der gleichen Ebene gehalten sind, in der auch vertikal zu den zugeordneten Seiten des Schaltschrankes stehende Profilseiten der vertikalen Rahmenprofile angeordnet sind.

Die Profilseiten und die Seitenwände bilden damit eine gemeinsame Befestigungsebene aus, in der die Anbauten einheitlich festgelegt werden können.

Eine mögliche Erfindungsvariante ist dadurch gekennzeichnet, dass der Befestigungsblock in einer Innenaufnahme des vertikalen Rahmenprofiles gehalten ist, welche aus zwei im Winkel zueinander stehenden Innenwänden gebildet ist und in Längsrichtung des Rahmenprofiles verläuft, dass die Innenwände mit Befestigungsaufnahmen versehen sind, und dass der Befestigungsblock mit dem wenigstens einen Hakenelement in einer der Befestigungsaufnahmen festgelegt ist. Insbesondere kann es dabei vorgesehen sein, dass der Befestigungsblock mit Zentrierflächen an den Innenwänden ausgerichtet ist, so dass eine exakte Positionierung möglich wird.

Nach einer bevorzugten Ausgestaltung der Erfindung ist es vorgesehen, dass der Befestigungsblock im Anschluß an eine der beiden Seitenwände einen Flansch aufweist, der wenigstens ein Hakenelement trägt, und dass der Flansch mit einer Schraubaufnahme versehen ist, in die eine Schraube eingeführt und in eine Befestigungsaufnahme des Rahmenprofiles eingeschraubt ist. Der Befestigungs-block kann mit seinen Hakenelementen zunächst an dem Rahmenprofil positio-niert und gehalten werden. Mit der Schraube kann der Befestigungsblock unverlierbar an dem Rahmenprofil fixiert werden. Dies ist vor allem dann von Bedeutung, wenn ein mit Einbauten bestückter Schaltschrank transportiert wird oder er Vibrationen ausgesetzt ist. Die Schraube stellt sicher, daß der Befestigungsblock mit seinen Hakenelementen stets an dem Rahmenprofil sicher festgelegt ist.

Wenn es vorgesehen ist, daß von den Seitenwänden horizontale Stützflächen abgebogen sind, die den Befestigungsblock zur Ober- und Unterseite hin abschließen, und daß die Stützflächen mit Befestigungsaufnahmen versehen sind, so kann der Befestigungsblock zur Anbindung von horizontalen Ablageflächen verwendet werden. Diese lassen sich auf die Stützflächen aufsetzen und mittels Befestigungsschrauben an den Befestigungsaufnahmen fixieren.

Die Erfindung wird im folgenden anhand eines in den Zeichnungen dargestellten Ausführungsbeispieles näher erläutert. Es zeigen:
- Fig. 1: in perspektivischer Darstellung ein vertikales Rahmenprofil eines Rahmengestelles und zwei Befestigungsblöcke,
- Fig. 2: in perspektivischer Darstellung ein vertikales Rahmenprofil mit zwei daran befestigten Befestigungsblöcken sowie eine Montageschiene und
- Fig. 3: zwei vertikale Rahmenprofile eines Rahmengestelles, an denen jeweils ein Befestigungsblock zur Aufnahme einer Ablageplatte befestigt sind.

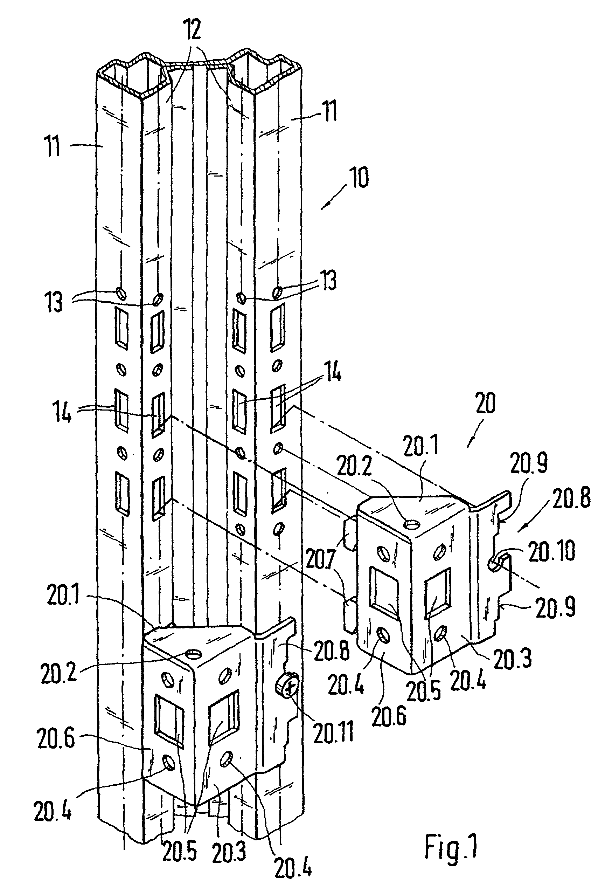

Die Fig. 1 zeigt ein vertikales Rahmenprofil 10 eines Schaltschrankes. Das vertikale Rahmenprofil 10 weist zwei, senkrecht zu den zugeordneten Seitenwänden des Rahmengestelles stehende Profilseiten 11 auf. Die Profilseiten 11 gehen rechtwinklig in Innenwände 12 über. Die Innenwände 12 stehen wiederum rechtwinklig zueinander. Sie bilden eine Innenaufnahme, die in Längsrichtung des Rahmenprofiles 10 verläuft. Sowohl die Innenwände 12 als auch die Profilseiten 11 sind mit Reihen von in gleicher Teilung zueinander beabstandeten Befestigungsaufnahmen 13, 14 ausgestattet. Dabei sind die Befestigungsaufnahmen 13 als kreisrunde Lochungen, die Befestigungsaufnahmen 14 als schlitzförmige Durchbrüche ausgebildet. In der vertikal verlaufenden Innenaufnahme des Rahmenprofiles 10 können Befestigungsblöcke 20 festgelegt werden. Die Befestigungsblöcke 20 sind als Stanz-Biegeteil aus einem Blechzuschnitt gefertigt.

Die Befestigungsblöcke 20 weisen zwei Seitenwände 20.3, 20.6 auf, die zueinander im rechten Winkel stehen. Die beiden Seitenwände 20.3, 20.6 bilden eine gemeinsame, zum Innenraum des Schaltschrankes gerichtete vertikale Innenkante. Jede der Seitenwände 20.3, 20.6 ist jeweils mit zwei kreisrunden Befestigungsaufnahmen 20.4 und einem viereckigen Durchbruch 20.5 versehen. Dabei entspricht der Abstand der beiden kreisrunden Befestigungsaufnahmen 20.4 dem Abstand der Befestigungsaufnahmen 13, die in die Profilseiten 11 bzw. Innenwände 12 eingearbeitet sind. Der Mittelabstand der Befestigungsaufnahme 20.4 zu dem Durchbruch 20.5 entspricht dem halben Teilungsraster, mit dem die Befestigungsaufnahmen 14 der Profilseiten 11, bzw. der Innenwände 12 zueinander beabstandet sind. An die Seitenwand 20.3 schließt sich über einen Übergangsabschnitt ein Flansch 20.8. an. Aus dem Flansch 20.8 sind Hakenelemente 20.9 freigestanzt und rechtwinklig abgebogen. Die Hakenelemente 20.9 stehen parallel zu der Seitenwand 20.6.

Weiterhin ist in den Flansch 20.8 eine Schraubaufnahme 20.10 eingebracht. An ihrem oberen horizontalen Ende ist von der Seitenwand 20.3 eine Stützfläche 20.1 abgebogen. Die Stützfläche 20.1 ist horizontal ausgerichtet. In ihrem den beiden Seitenwänden 20.3, 20.6 zugewandten Eckbereich trägt die Stützfläche 20.1 eine Befestigungsaufnahme 20.2.

Die zweite Seitenwand 20.6 ist in Richtung zu dem Flansch 20.8 hin abgewinkelt. Die dabei entstandene Abwinklung steht parallel zu der Seitenwand 20.3. Aus der Abwinklung sind zwei Hakenelemente 20.7 ausgestanzt und so abgebogen, daß sie parallel zu der zugeordneten Seitenwand 20.6 stehen.

Der Befestigungsblock 20 läßt sich an dem vertikalen Rahmenprofil 10 festlegen. Hierzu werden die mit Einführschrägen versehenen Hakenelemente 20.7, 20.9 in Befestigungsaufnahmen 14 der Rahmenprofile 10 eingehangen. Die Hakenelemente 20.7 greifen dabei in die Befestigungsaufnahmen 14 der zugeordneten Innenwand 12 ein, die Hakenelemente 20.9 hintergreifen die Befestigungsaufnahmen 14 der zugeordneten Profilseite 11. Wie aus der Darstellung gemäß Fig. 1 ersichtlich ist, wird der Befestigungsblock an die Befestigungsaufnahmen 14 angesetzt und anschließend vertikal nach unten geschoben, so daß sich die Hakenelemente 20.7, 20.9 an den Befestigungsaufnahmen 14 verspannen. Um sicherzustellen, daß der Befestigungsblock 20 nicht mehr von dem Rahmenprofil 10 abfallen kann, beispielsweise infolge von Vibrationen oder bei dem Transport des Schaltschrankes, läßt sich zusätzlich eine Schraubverbindung zwischen dem Befestigungsblock 20 und dem Rahmenprofil 10 herstellen. Hierzu wird eine Schraube 20.11 in die Schraubaufnahme 20.10 eingeführt und in die jeweilige Befestigungsaufnahme 13 eingeschraubt. Die Schraube 20.11 ist dabei als selbstschneidende Schraube ausgebildet, die sich ihr Gewinde in die Befestigungsaufnahme 13 einschneidet.

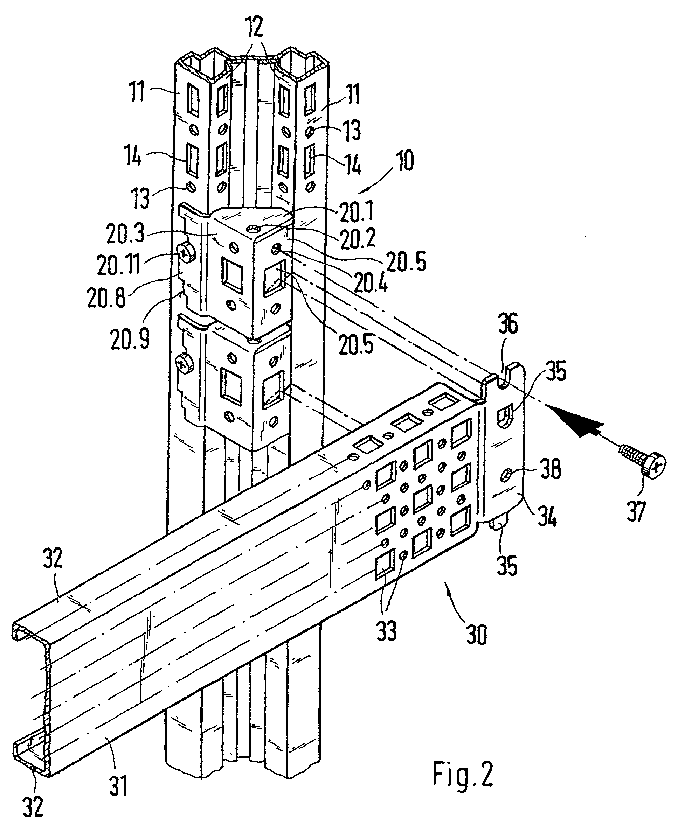

In der Fig. 2 ist eine mögliche Anwendungsvariante des erfindungsgemäßen Befestigungsblockes 20 gezeigt. An dem vertikalen Rahmenprofil 10 sind zwei übereinander stehende Befestigungsblöcke 20 in der vertikalen Innenaufnahme festgelegt. An diesen kann eine Montageschiene 30 befestigt werden. Die Montageschiene 30 ist kastenartig aus einer Frontwand 31 und zwei rechtwinklig davon abgebogenen Seitenwänden 32 gebildet. Die Frontwand 31 und die Seitenwände 32 sind jeweils mit Reihen von in gleicher Teilung zueinander beabstandeten Befestigungsaufnahmen 33 versehen. An den längsseitigen Enden der Montageschiene 30 sind Seitenteile 34 angeschlossen. Da in der Fig. 2 die Montageschiene 30 nur teilweise dargestellt ist, ist auch nur ein Seitenteil 34 ersichtlich. Aus dem Seitenteil 34 sind zwei Haken 35 freigestanzt und in Richtung zu den freien Enden der Seitenwände 32 hin abgebogen. Des weiteren trägt das Seitenteil 34 zwei Schraubaufnahmen 36.

Die so ausgestaltete Montageschiene 30 kann mit ihren Haken 35 in die Befestigungsaufnahme 20.4 des Befestigungsblockes 20 eingehangen werden. Um die Montageschiene unverlierbar an den Befestigungsblöcken 20 zu halten kann zusätzlich eine Verschraubung vorgenommen werden. Hierzu wird eine Befestigungsschraube 37 in eine der Schraubaufnahmen 36, 38 eingeführt und in die zugeordnete Befestigungsaufnahme 20.4 eines der beiden Befestigungsblöcke 20 eingeschraubt. Auch hier ist die Befestigungsschraube 37 wieder als selbstschneidende Schraube ausgebildet, die sich ihr Gewinde in die Befestigungsaufnahme 20.4 selbsttätig einschneidet. Wie aus der Darstellung gemäß Fig. 2 ersichtlich ist, wird das Seitenteil 34 mittels eines Übergangsabschnittes über der Montageebene der Frontwand 31 gehalten. Dieser Überstand ist so gewählt, daß die Frontwand 31 in der gleichen Ebene angeordnet ist, in der auch die Seitenwände 20.6 und die Profilseite 11 liegt.

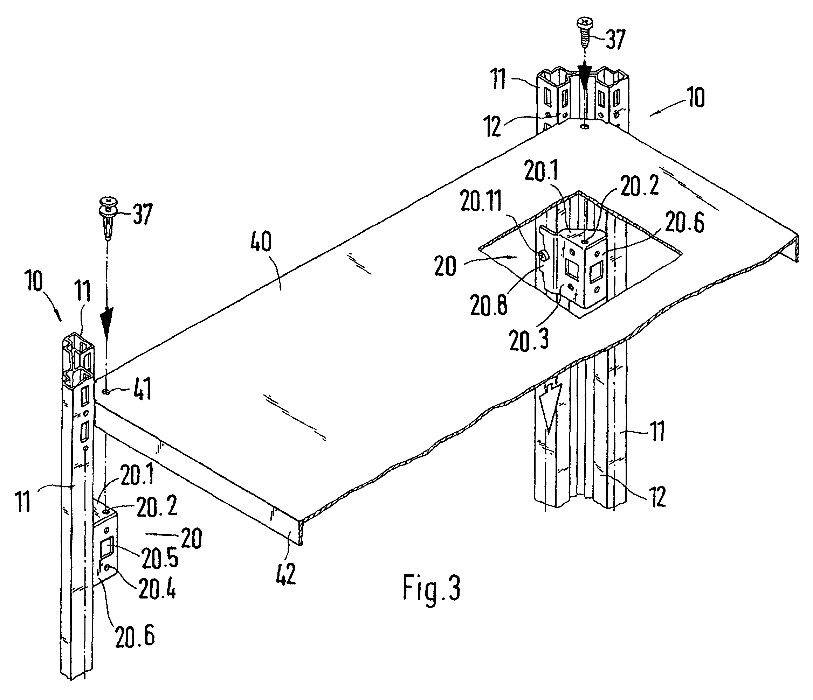

Ein weiteres Anwendungsbeispiel des Befestigungsblockes 20 ergibt sich aus der Fig. 3. In dieser Darstellung sind zwei benachbarte vertikale Rahmenprofile 10 eines Rahmengestelles ausschnittsweise gezeigt. An jedem der Rahmenprofile 10 ist ein Befestigungsblock 20 festgemacht. Dabei sind die Befestigungsblöcke 20 an den vertikalen Rahmenprofilen jeweils in der gleichen Höhe gehalten, so daß auch die Stützflächen 20.1 in einer Ebene liegen. Die Ausrichtung der Stützflächen 20.1 zueinander ist aufgrund des vorgegebenen Befestigungsrasters der Befestigungsaufnahmen 14 in den vertikalen Rahmenprofilen 10 einfach möglich. Auf die Stützflächen 20.1 läßt sich eine Ablageplatte 40 aufsetzen. Die Ablageplatte 40 trägt in ihren, den Rahmenprofilen 10 zugekehrten Eckbereichen Schraubaufnahmen 41. Durch diese Schraubaufnahmen 41 können Befestigungsschrauben 37 eingeführt und in den Befestigungsaufnahmen 20.2 der Stützflächen 20.1 festgelegt werden. Zur Aussteifung sind von den Rändern der Arbeitsplatte 40 vertikale Stege 42 abgekantet.

## Patentansprüche

1. Befestigungsvorrichtung zur Anbringung von Anbauelementen, wie Montageschienen (30), Ablageplatten (40) oder dergleichen an vertikalen Rahmenprofilen (10) eines Schaltschrankes, welche mit Reihen von in gleicher Teilung zueinander beabstandeten Befestigungsaufnahmen (13, 14) versehen sind, wobei an dem Rahmenprofil (10) ein Befestigungsblock (20) anbaubar ist, der mit Befestigungsaufnahmen (20.4, 20.5) zur Ankopplung des Anbauelementes versehen ist, wobei der Befestigungsblock (20) als Stanz-Biegeteil aus einem Blechzuschnitt oder als Spritzteil gefertigt ist, wobei von dem Befestigungsblock (20) wenigstens ein Hakenelement (20.7, 20.9) freigestellt ist, welches in eine zugeordnete Befestigungsaufnahme (14) des Rahmenprofils (10) einhängbar ist, wobei der Befestigungsblock (20) zwei rechtwinklig zueinander stehende Seitenwände (20.3, 20.6) aufweist, die eine gemeinsame, dem Innenraum des Schaltschrankes zugewandte vertikale Innenkante bilden, und wobei die Seitenwände (20.3, 20.6) mit den Befestigungsaufnahmen (20.4, 20.5) zur Anbindung der Anbauelemente ausgestattet sind,
**dadurch gekennzeichnet,**
**dass** die Seitenwände (20.3, 20.6) in der gleichen Ebene gehalten sind, in der auch vertikal zu den zugeordneten Seiten des Schaltschrankes stehende Profilseiten (11) der vertikalen Rahmenprofile (10) angeordnet sind.

2. Befestigungsvorrichtung nach Anspruch 1,
**dadurch gekennzeichnet,**
**dass** der Befestigungsblock (20) in einer Innenaufnahme des vertikalen Rahmenprofiles (10) gehalten ist, welche aus zwei im Winkel zueinander stehenden Innenwänden (12) gebildet ist und in Längsrichtung des Rahmenprofiles (10) verläuft,
**dass** die Innenwände (12) mit Befestigungsaufnahmen (13, 14) versehen sind, und
**dass** der Befestigungsblock (20) mit dem wenigstens einem Hakenelement (20.7) in einer der Befestigungsaufnahmen (14) festgelegt ist.

3. Befestigungsvorrichtung nach Anspruch 2,
**dadurch gekennzeichnet,**
**dass** der Befestigungsblock (20) mit Zentrierflächen an den Profilseiten (11) und/oder den Innenwänden (12) ausgerichtet ist.

4. Befestigungsvorrichtung nach einem der Ansprüche 1 oder 2,
**dadurch gekennzeichnet,**
**dass** der Befestigungsblock (20) im Anschluß an eine der beiden Seitenwände (20.3, 20.6) einen Flansch (20.8) aufweist, der wenigstens ein Hakenelement (20.9) trägt, und
**dass** der Flansch (20.8) mit einer Schraubaufnahme (20.10) versehen ist, in die eine Schraube (20.11) eingeführt und in eine Befestigungsaufnahme (13) des Rahmenprofiles (10) eingeschraubt ist.

5. Befestigungsvorrichtung nach einem der Ansprüche 1 bis 3,
**dadurch gekennzeichnet,**
**dass** von den Seitenwänden (20.3, 20.6) horizontale Stützflächen (20.1) abgebogen sind, die den Befestigungsblock (20) zu Ober- und Unterseite hin abschließen, und
**dass** die Stützflächen (20.1) mit Befestigungsaufnahmen (20.2) versehen sind.

## Claims

1. Fastening device for fitting add-on elements, such as installation rails (30), shelf panels (40) or the like, on vertical frame profiles (10) of a switch cabinet, said device being provided with rows of equally spaced-apart fastening mounts (13, 14), it being the case that it is possible to attach to the frame profile (10) a fastening block (20), which is provided with fastening mounts (20.4, 20.5) for the coupling of the add-on element, that the fastening block (20) is produced as a punched and bent element from a sheet-metal blank or as an injection moulding, that at least one hook element (20.7, 20.9) is made in the fastening block (20), it being possible for said hook element to be hung in an associated fastening mount (14) of the frame profile (10), that the fastening block (20) has two side walls (20.3, 20.6), which are located at right angles to one another and form a common, vertical inner edge directed towards the interior of the switch cabinet, and that the side walls (20.3, 20.6) are provided with the fastening mounts (20.4, 20.5) for the attachment of the add-on elements, **characterized in that** the side walls (20.3, 20.6) are retained in the same plane as profile sides (11) of the vertical frame profiles (10) are arranged, said profile sides also being located perpendicularly to the associated sides of the switch cabinet.

2. Fastening device according to Claim 1, **characterized in that** the fastening block (20) is retained in an inner mount of the vertical frame profile (10), said inner mount being formed from two inner walls (12), which are located at an angle to one another, and running in the longitudinal direction of the frame profile (10), **in that** the inner walls (12) are provided with fastening mounts (13, 14), and **in that** the fastening block (20) is secured in one of the fastening mounts (14) by way of the at least one hook element (20.7).

3. Fastening device according to Claim 2, **characterized in that** the fastening block (20) is aligned with centering surfaces on the profile sides (11) and/or the inner walls (12).

4. Fastening device according to either of Claims 1 and 2, **characterized in that**, adjoining one of the two side walls (20.3, 20.6), the fastening block (20) has a flange (20.8) which bears at least one hook element (20.9), and **in that** the flange (20.8) is provided with a screw-connection mount (20.10), into which a screw (20.11) is introduced and is screwed into a fastening mount (13) of the frame profile (10).

5. Fastening device according to one of Claims 1 to 3, **characterized in that** horizontal supporting surfaces (20.1), which terminate the fastening block (20) in the direction of the top side and underside, are bent from the side walls (20.3, 20.6), and **in that** the supporting surfaces (20.1) are provided with fastening mounts (20.2).

## Revendications

1. Dispositif de fixation pour l'installation d'éléments de montage tels que des rails de montage (30), des plaques d'étagère (40) ou similaires sur des profilés verticaux de cadre (10) d'une armoire de commutation, lesquels profilés sont dotés de rangées de logements de fixation (13, 14) espacés les uns des autres à intervalles égaux, un bloc de fixation (20) qui peut être monté sur le profilé de cadre (10) étant doté de logements de fixation (20.4, 20.5) pour l'accouplement de l'élément de montage, le bloc de fixation (20) étant fabriqué comme pièce pliée estampée à partir d'un flan de tôle ou comme pièce moulée par injection, tandis qu'au moins un élément en crochet (20.7, 20.9) apte à s'engager dans un logement de fixation (14) correspondant du profilé de cadre (10) déborde du bloc de fixation (20), le bloc de fixation (20) présentant deux parois latérales (20.3, 20.6) qui sont disposées perpendiculairement l'une à l'autre et forment une arête intérieure verticale commune tournée vers l'espace intérieur de l'armoire de commutation, et les parois latérales (20.3, 20.6) étant dotées des logements de fixation (20.4, 20.5) qui servent à relier les éléments de montage,
**caractérisé en ce que**
les parois latérales (20.3, 20.6) sont maintenues dans les plans dans lesquels sont également situés les côtés (11) des profilés verticaux de cadre (10) qui sont disposés à la verticale vers les côtés associés de l'armoire de commutation.

2. Dispositif de fixation selon la revendication 1, **caractérisé en ce que** le bloc de fixation (20) est maintenu dans un logement intérieur du profilé vertical de cadre (10), lequel logement est formé par deux parois intérieures (12) disposées obliquement l'une par rapport à l'autre et s'étend dans le sens de la longueur du profilé de cadre (10), **en ce que** les parois intérieures (12) sont dotées de logements de fixation (13, 14) et **en ce que** le bloc de fixation (20) est immobilisé dans l'un des logements de fixation (14) par au moins un élément en crochet (20.7).

3. Dispositif de fixation selon la revendication 2, **caractérisé en ce que** le bloc de fixation (20) est orienté sur les côtés (11) et/ou sur les parois latérales (12) du profilé par des surfaces de centrage.

4. Dispositif de fixation selon la revendication 1 ou 2, **caractérisé en ce qu'**au raccord avec l'une des deux parois latérales (20.3, 20.6), le bloc de fixation (20) présente une bride (20.8) qui porte au moins un élément en crochet (20.9) et **en ce que** la bride (20.8) est dotée d'un logement pour vis (20.10) dans lequel une vis (20.11) est insérée, la vis étant vissée dans un logement de fixation (13) du profilé de cadre (10).

5. Dispositif de fixation selon l'une des revendications 1 à 3, **caractérisé en ce que** des surfaces horizontales d'appui (20.1) qui referment le bloc de fixation (20) sur son côté supérieur et sur son côté inférieur sont rabattues par rapport aux parois latérales (20.3, 20.6) et **en ce que** les surfaces d'appui (20.1) sont dotées de logements de fixation (20.2).
